(19) Europäisches Patentamt

European Patent Office

Office européen des brevets

(11) Publication number: **0 433 729 B1**

## EUROPEAN PATENT SPECIFICATION

(45) Date of publication of patent specification: **20.04.94**

(21) Application number: **90122874.2**

(22) Date of filing: **29.11.90**

(51) Int. Cl.⁵: **B01D 3/08**, B01D 1/30, B01L 3/00, G01N 1/28

(54) **Rotary evaporator.**

(30) Priority: **01.12.89 JP 140015/89 U**
**05.02.90 JP 10489/90 U**

(43) Date of publication of application:
**26.06.91 Bulletin 91/26**

(45) Publication of the grant of the patent:
**20.04.94 Bulletin 94/16**

(84) Designated Contracting States:
**CH DE FR GB LI**

(56) References cited:
**DE-A- 3 641 152**
**GB-A- 1 039 709**

**PATENT ABSTRACTS OF JAPAN, vol. 4, no. 80 (M-015), 10th June 1980;& JP-A-55 041 385 (MATSUSHITA ELECTRIC) 24-03-1980**

(73) Proprietor: **SHIONOGI & CO., LTD.**
**1-8, Doshomachi 3-chome,**
**Chuo-ku**
**Osaka 541(JP)**

(72) Inventor: **Kadono, Tetsuro**
**30-3, Yamanoue-Kitamachi**
**Hirakata City, 573(JP)**
Inventor: **Okamoto, Joji**
**5-11, Wakabadai 1-chome**
**Kita-ku, Kobe City, 651-11(JP)**

(74) Representative: **Herrmann-Trentepohl, Werner, Dipl.-Ing. et al**
**Patentanwälte Herrmann-Trentepohl, Kirschner, Grosse, Bockhorni & Partner**
**Forstenrieder Allee 59**
**D-81476 München (DE)**

**Description**

BACKGROUNDS OF THE INVENTION

1. Field of the Invention

The present invention generally relates to a rotary evaporator for concentrating a sample in a state of solution. Particularly, it is concerned with an improvement in a joint-pipe which serves to introduce solvent vapor from a flask containing the sample solution into a condensor or an adapter communicating with and/or supporting the condensor.

2. Description of the Prior Art

The known conventional rotary evaporator which has hitherto been widely used consists essentially of a sample flask, a condensor, and a vacuum source. In addition, a reservoir for recovered solvent may optionally be included. The sample flask may usually be rotated in an oblique posture while being immersed in a water bath for warming the flask. The condensor is used for liquefying the solvent vapor generated in the flask and for trapping the liquefied vapor, and communicates with the vacuum source which reduces the inside pressure.

Generally, the condensor is a coiled one whose coiled tube permits circulation of cooling water to cool the solvent vapor traveling therethrough. Such condensor is usually supported in its oblique posture that its axis is brought in line with that of the sample flask. Alternatively, the condensor may be one of Dewar-bottle type which consists essentially of an inner and outer bottles to define an annular cylindrical space therebetween, through which the solvent vapor travels.

The inner bottle contains ice or a freezing mixture such as dry ice/acetone as occasion demands, to cool the solvent vapor which contacts the outer surface of the inner bottle. In the case of Dewar-bottle type however, the condensor needs to be erected, and thus, the flask cannot be connected directly with the condensor but may communicate with the condensor through an adaptor, which may also serve to support the condensor and in turn usually be supported in the same manner as in the afore-mentioned case. This type of the arrangement may also be employed for the coiled one, if the condensor is mounted separately.

The coiled condensor may further include, inter alia, a plugged cock with a branch pipe for replenishing sample liquid, at its upper part, and another branch pipe for expelling the condensed liquid at its lower part as occasion demands. The latter may have a communicating ball-joint.

In either case, the sample flask must be supported in its oblique posture while being immersed in the water contained in the bath and connected to the condensor or the adapter through a joint-pipe (which may alternatively be called as a rotary joint or a center joint) which can engage with a rotating component of a driving means (a journal-box) in order to rotatably be driven.

The use of joint-pipe entails insufficient efficiency on the conventional rotary evaporator because the solvent vapor from the sample flask must travel along a relatively long flow path through the joint-pipe while being cooled, and thus, in the case of treating a high boiling-point solvent such as water in particular, the major portion of the vapor liquefies and condenses before reaching the condensor or the adaptor to return to the sample flask. Both condensors of the coiled type and the Dewar bottle type involve this drawback.

In an arrangement wherein the vapor is cooled by water circulating through the coiled tube of the coiled condensor supported in an oblique posture, and particularly in treating low boiling-point solvent, the condensed liquid in the condensor still maintains such high temperature that the large percentage of the once trapped liquid would evaporate again.

In contrast to this, the temperature of the condensed liquid may sufficiently be lowered in another arrangement comprising an upright Dewar bottle type condensor as compared with that includes the coiled one. In this arrangement, the solvent vapor ascending through the annular cylindrical path contacts the outer surface of the inner bottle which contains a cooling medium such as ice or the freezing mixture, to be cooled during the travel to liquefy as dews formed on said outer surface and to descend along the surface while condensing together to drip down from its bottom.

Portion of the vapor which directly contacts the bottom of the inner bottle however liquefies and condenses without being cooled sufficiently, in the case of low boiling-point solvent (of small latent heat of evaporation) in particular, and drips down to a non-adiabatic reservoir for the recovered solvent to soon evaporate again by absorbing external heat. Thus, a localized circulation (round trip) of the solvent vapor takes place between the condensor and the reservoir, thereby to invite a lowering of the evaporating efficiency and to cause a difficulty in concentrating a sample which contains a high boiling-point solvent such as water. And therefore the localized circulation makes a solute therein be dried.

Particularly, if the solute to be brought to dryness is thermally labile, it is liable to be decomposed or fragmented unless being treated at low temperature in a short time. Such a mild treating conditions has been difficult to bring about with any of the conventional equipment.

In either case of the conventional equipments, when the whole system composed of the condensor and/or adapter and the associated pipelines is saturated with raw vapor of the solvent, there arises a lowering of vacuum (vacuum level). Therefore, the evaporating efficiency is lowered by the dew drop formed on inner walls of the pipelines, and hence the return flow of the condensed liquid and the reevaporation is lowered.

Furthermore, if being combined with a condensor of a low cooling efficiency, the solvent vapor might occasionally been sent to a vacuum generating means in its gas phase. In a case of using an aspirator in a closed system as the vacuum generating means, the solvent entrained to be mixed with the circulating water accumulates therein little by little, thereby to lower the capacity of the aspirator in a short time period. If an aspirator of sink-discharge type is used, it causes a serious problem in polluting environment.

What is needed here is a rotary evaporator which obviates at least one of the above-described various drawbacks inherent to the conventional ones.

Other objects of the present invention and the attendant advantages thereof will be made apparent to those skilled in the art by reading the following detailed description.

## SUMMARY OF THE INVENTION

According to the present invention, there is provided a rotary evaporator which comprises a joint-pipe of an evacuated double tube structure.

Any of the materials selected from glasses, metals and plastic materials can be employed for constructing the joint-pipe. The inner sides of the double tube wall, i.e., the sides facing the the evacuated space, may preferably be silver-plated if the material is transparent. In anyway, this structure should perform a sufficient adiabatic or heat-insulating function, and more preferably should have a sufficient mechanical strength.

Such a structure may be exemplified as one formed by fitting a glass pipe in the inner pipe of a stainless evacuated double tube. The inside face of the evacuated stainless double tube may alternatively be glass-glazed or coated with polytetrafluoroethylene. In addition to the inside surface, the outside face of the double tube may also be glazed or coated. In the case of stainless steel, wall thickness can be made as small as 0.5 mm, and thus, the inner diameter needs not be made unreasonably small for a given outer diameter to make a joint-pipe of practical size available.

This joint-pipe has a great versatility in its application, and the gas/liquid separation apparatus with which said pipe should be combined needs not be limited. This joint-pipe can demonstrate an acceptable effect in preventing dew drop formed in any of the above-described conventional rotary evaporators, which have a condensing means of the cooling-water-circulating coiled condensor or Dewar-bottle type condensor. Should this joint-pipe be combined with one of the apparata disclosed in Laid-open Japanese Utility Model Registration Applications (Jikkaisho 62-156,303 and Jikkaihei 1-120,902) and Japanese Utility Model Registration Application (Jitsuganhei 1-101, 284)(hereinafter, called as "Patent Literature"), it may also serve to solve the attendant problems and to produce, at present, the greatest advantages.

To describe more in detail, said joint-pipe is formed to have a structure that is connectable, at its lower end, with the top opening of the sample flask by a lap-fit joint. The upper end of the joint-pipe projects into the bottom opening of the condensor or the adapter to be loosely accommodated therein. A part of the pipe between the upper and lower end is shaped to be engageable with, a rotating component of a driving means. Thus its inside path is designed to communicate the sample flask with the condensor or the adapter. A flange formed around the bottom opening of the condensor or the adapter is secured on a stationary component of the driving means.

In a conventional rotary evaporator, a cooling-water-circulating coiled-condensor is used in combination with the joint pipe. Such a condensor usually has at its top end a plug cock having a closable branch pipe for replenishing sample and, around its bottom end another branch pipe for connecting with a vacuum generating means and a communicating ball-joint through which the condensed liquid is expelled.

If the joint pipe is not combined with this type of condensor, an adapter for communicating with a condensor may be used. The adapter also has, at its top end, a plug cock having a closable branch pipe for replenishing sample. Around its bottom end, there is provided a second branched pipe leading to the condensor at directly above its joint-pipe accommodating part and, at a position diametrically opposite to the second branched pipe there is provided a third branch pipe having a communicating ball-joint for expelling the condensed liquid therethrough.

In a conventional rotary evaporator, the second branch pipe of said adapter has served to directly support a condensor of Dewar-bottle type, and the third branch pipe has served to connect with a non-adiabatic (single-wall) reservoir of round flask for recovering the condensed liquid.

But, in a more preferred embodiment of the present invention, the second branch pipe of said adapter serves to communicate with, through an adiabatic or heat-insulated flexible tube, a condensor of a gas/liquid separation apparatus disclosed in any of the patent literature. In such cases, it is needless to say that a third branch pipe for expelling the condensed liquid can be dispensed with.

In any case of embodying the present invention in an apparatus comprising the condensor of the type shown in the embodiment as well as one of the conventional condensors, an additional branched pipe with a needle valve for replenishing inert gas may be provided at the upper end of the condensor or the adapter. This is also convenient for giving the apparatus an appropriate degree of vacuum effective for preventing bumping of solvent liable to boil violently, and for replenishing an appropriate amount of nitrogen or the like through the inert gas replenishing branch pipe to prevent possible oxidation of the sample and to increase the evaporating velocity of high boiling-point solvent. The flow path of the needle valve should preferably be of arbitrary adjustment.

The adapter may preferably be made adiabatic or heat insulated. To this end, its major part may be made of glass and of an evacuated double wall structure. Alternatively, it may be another double wall structure wherein warmed water of a water bath used for heating the sample flask is being circulated through a spheric space formed between the inner and outer walls, or may positively be heated by an electric heater or the like means. Furthermore, said plug-cock may preferably be of an evacuated double wall structure as well, whose inside wall surface is silver-plated.

Inside the joint-pipe of evacuated double wall structure of the present invention, virtually no dew drop of the solvent vapor is produced. In an apparatus arranged by combining the selected one of the adapter with the condensor, as a component of the gas/liquid separating means disclosed in any one of the patent literatures, virtually no dew drop of the solvent vapor is produced in the entire pipeline from the adapter to the gas/liquid separating means. The selected adapter, whose upper opening is closed with a plug cock having a branch pipe for replenishing inert gas and another one for replenishing sample solution, accommodates a joint-pipe embodying the present invention at its lower part. It is further provided with, just above the joint-pipe accommodating part, a third branch pipe which leads to the condensor. The decrease in the degree of vacuum in the sample flask is thus effectively avoided to prevent the decrease in the evaporating efficiency of the overall apparatus including the sample flask and the pipeline accordingly.

As stated in the above, by employing the rotary evaporator embodying the present invention which comprises a joint-pipe of an evacuated double tube structure, any reverse flow of the solvent ascending along the joint-pipe as vapor to the sample flask does not virtually occur. And therefore, it is possible to achieve complete dryness of the bringing solute. The improvement to the achievement owes to the configuration that the inner wall of the joint-pipe on which the solvent vapor is most likely to liquefy and condense is made adiabatic.

In addition to this, if the adapter of adiabatic or heat-insulated type is employed, no dew drop forming inside there takes place, and if combined with one of the apparata disclosed in the patent literature in particular, it serves to prevent a local circulation (round trip) of the solvent vapor between the condensor and the recovered solvent reservoir through the adapter due to the reevaporation of the solvent. It thus serves to improve the evaporating efficiency and/or concentrating efficiency. Furthermore, even a sample including a high-boiling point solvent such as water can be brought to complete dryness in an extremely mild conditions, i.e., low temperature and short time period.

As discussed in the above, the present invention can be embodied as an apparatus capable of liquefying and trapping the solvent vapor generated in the sample flask with an extremely high heat-exchanging efficiency. The apparatus can separate and recover the liquefied solvent with a high safety and without any environmental pollution even if the sample includes a low boiling-point solvent and/or an intoxicating or inflammable solvent.

In addition to this, the present invention has an extremely wide range of versatility in its application.

BRIEF EXPLANATION OF THE DRAWINGS

Figs. 1 and 4 are schematic side cross-sectional views showing essential parts of the rotary evaporators embodying the present invention, respectively.

Figs. 2 and 3 are schematic views of the conventional rotary evaporators including the illustrated essential parts, respectively, showing modes of applications

Figs. 5 and 6 are schematic side cross-sectional views showing other embodiments of the rotary evaporators.

Fig. 7 is a schematic flow diagram showing a gas/liquid separating-solvent concentrating system arranged by centering around the rotary evaporators embodying the present invention.

Fig. 8 is a schematic side cross-sectional view showing a further embodiment of the rotary evaporators.

DESCRIPTION OF THE PREFERRED EMBODIMENTS

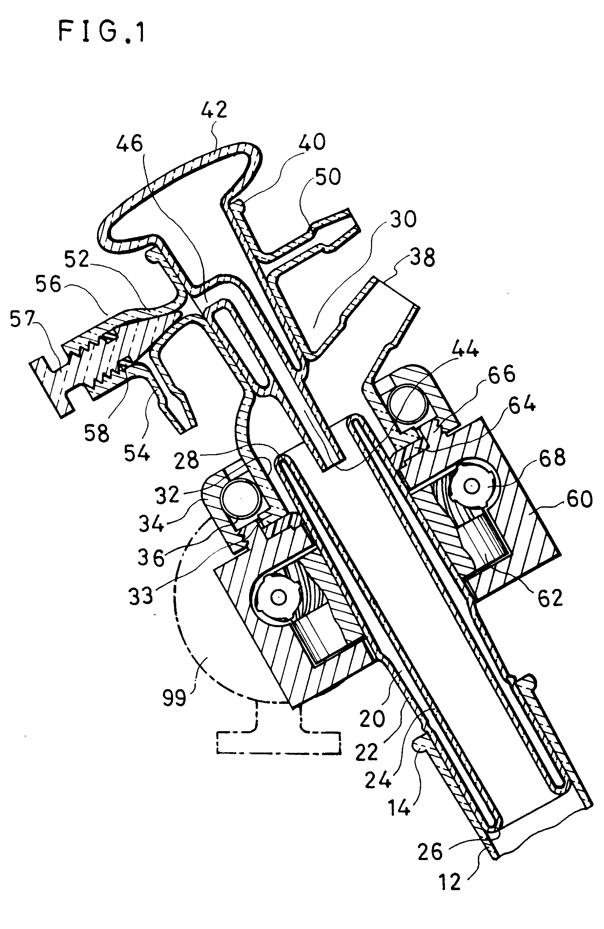

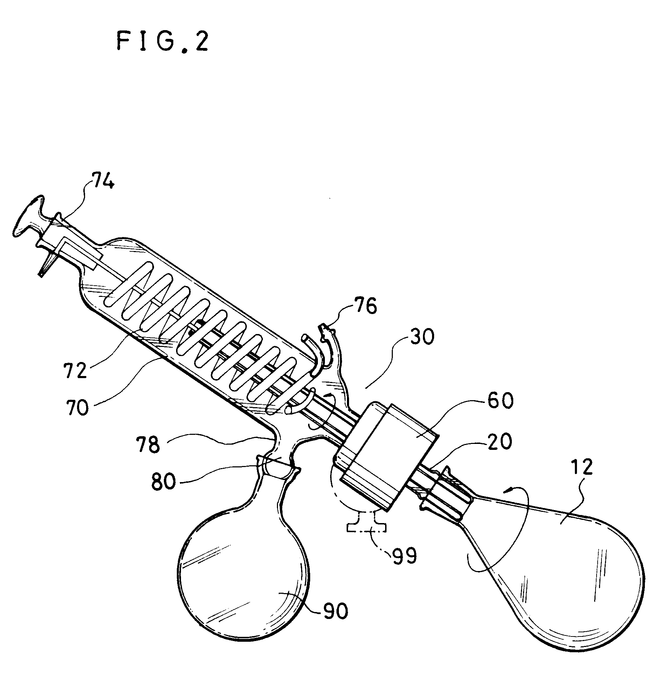

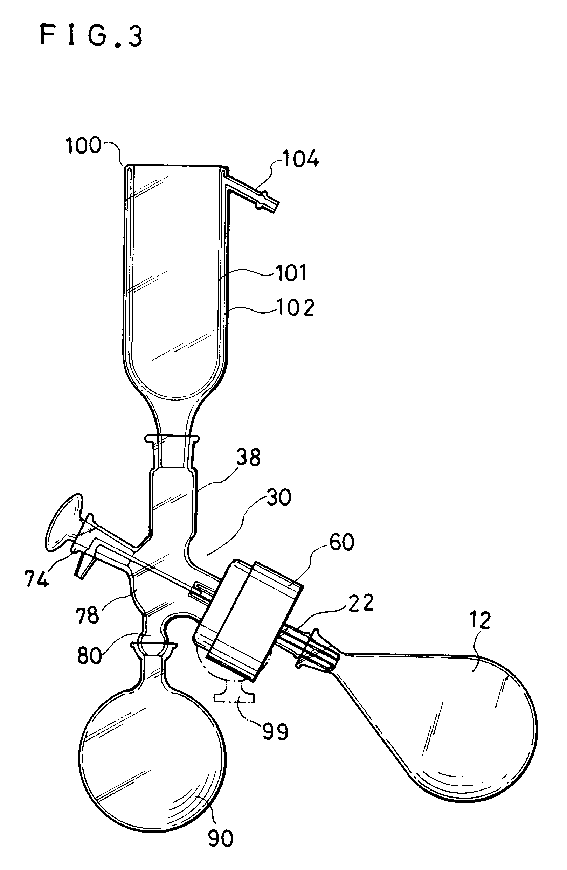

In the cross-sectional view of Fig. 1, an adapter 30 of a rotary evaporator 10 as a typical embodiment of the present invention is shown with its related components, and its exemplified modes of the applications in the conventional condensor or adapter are schematically shown in the cross-sectional views of Figs. 2 and 3. In Fig. 1, a glass joint-pipe 20 is composed of an outer and inner walls 22 and 24 which form a double tube structure whose inside annular cylindrical space formed between the walls 22 and 24 is evacuated to make the pipe 20 adiabatic.

Although it is not specifically shown in the drawing because of technical difficulty of drawing very thin layer, the inside faces of the double walls 22 and 24 of the joint pipe 20 are silver-plated in order to prevent radiation. The joint pipe 20 pierces through a journal box 60 being connected with a driving gear 62 by, for instance, a lap-fit engagement, so as to receive a rotating moment from driving worms 68. And the joint pipe 20 is kept in gas-tight by a sliding annular packing 64 of 0-ring or a similar function. The lower end 26 of the joint pipe 20 is connectable with a top opening 14 of the sample flask 12 by a lap-fit engagement, while the upper end 28 projects into a lower opening 32 of an adapter 30, so as to be accommodated with a substantial clearance.

The lower opening 32 of the adapter 30 has a flange 33 whose bottom face closely contacts with the annular packing 64. The flange 33 itself is secured to the journal box 60 mounted on a stationary part of the apparatus, by a ring bolt 66 which is provided on the journal box 60, a box nut 34 which threads in said bolt 66 and a ring spring 36. The driving gear 62 is driven, through the worms 68 of a gear train in the journal box, by a motor 99.

Just above the lower opening 32 of the adapter 30 into which the upper end 28 of the joint pipe 20 projects, there is provided a branch pipe 38 which is connected to a condensor outside of FIG. 1. The upper opening 40 of the adapter 30 is stopped by a lap-fit plug 42 to form a plug-cock in combination, of usually closed mode.

The plug 42 is also of an evacuated double wall structure with silver-plated inside face and has a center pipe 44 whose side port 46 is capable of communicating with either one of branch pipes 50 and 52 provided on the side of the opening 40. Any pipe for replenishing solvent or inert gas may be connected to the tip of the center pipe 44, through, for instance, a flexible tube as occasion demands, though those options are omitted in the illustration for the clarity of the drawing.

The branch pipe 52 is further provided with an additional branch pipe 54, but the communication therewith is designed to be adjustably checked to an entirely-closed state by a needle valve 56 composed of a stopper 57 and a ring packing 58.

FIG.2 shows another embodiment. Corresponding parts and components to the first embodiment are shown by the same numerals and marks, and the description thereon made in the first embodiment similarly apply. Differences and features of this first embodiment from the first embodiment are as follows.

The condensor 70, which is formed integrally with the adapter 30, shown schematically in Fig. 2, is substantially identical with those commercially available at present. It may be used to embody the present invention if combined with the joint-pipe 20 of the present invention. The condensor 70 is usually supported by a stationary part of the apparatus in an oblique posture and is provided with a coiled tube 72 for circulating cooling water. On upper end of the condensor 70, an opening 74 having the configuration and function similar to said opening 40 of the adapter 30 of Fig. 1 is provided. At lower part thereof, there are also provided a branch pipe 76 for connection with a vacuum source and another branch pipe 78 for removing or expelling the condensed liquid. The branch pipe 78 has a communicating ball-joint 80 for connecting it with the condensed liquid reservoir 90.

In still another embodiment shown in Fig. 3, the joint-pipe is combined with an upright condensor 100 of Dewar bottle type. Corresponding parts and components to the first embodiment are shown by the same numerals and marks, and the description thereon made in the first embodiment similarly apply. Differences and features of this first embodiment from the first embodiment are as follows. The condensor 100 is vertically mounted on a stationary part of the apparatus partly at the branch pipe 38 of the supporting adapter 30 by a lap-fit engagement.

In this embodiment, an inner bottle 101 contains a freezing mixture such as dry ice/acetone, while a branch pipe 104 for connecting with the vacuum source is provided on one side of the upper end of the outer bottle 102. An annular cylindrical space formed between the inner and the outer bottles 101, 102 serves as a path for the solvent vapor. Since the branch pipe 78 for expelling the condensed liquid is provided on the adapter 30 at a position substantially diametrically opposite to the branch pipe 38, the liquid formed as dews on the outer wall of the inner bottle 101 drips down directly into the condensed liquid reservoir 90. The details of this embodiment other than this are similar to those being already illustrated.

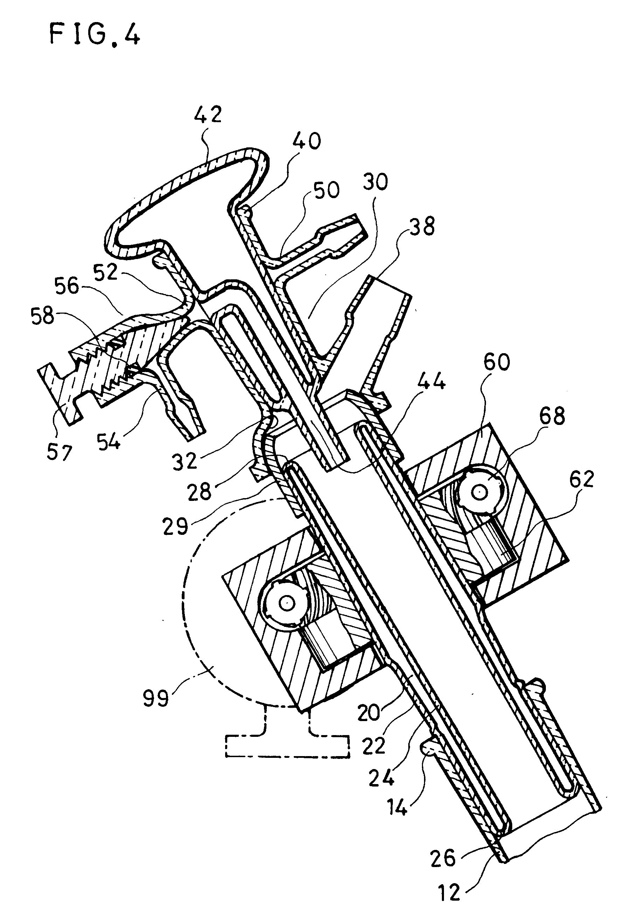

Fig. 4 shows still another embodiment of an adapter whose joint pipe has a different mode of gas-tight structure. The upper end 28 of the illustrated joint pipe 20 is tightly covered with a ball-cap 29 made of, for instance, polytetrafluoroethylene which is thrusted on the lap-finished lower opening 32 of the adapter 30 to form a rotation-slidable sealed joint in combination. This gas-tight structure can dispense with all the afore-mentioned components for securing the adapter, such as, the ring bolt 66, annular packing 64, box nut 34, and ring spring 36 of the embodiment illustrated in Fig. 1. Therefore, the structure is much simplified.

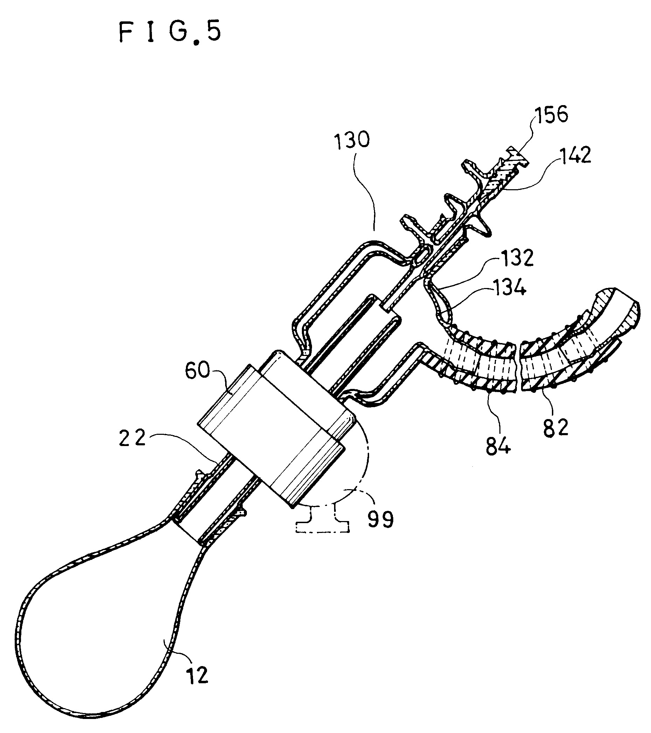

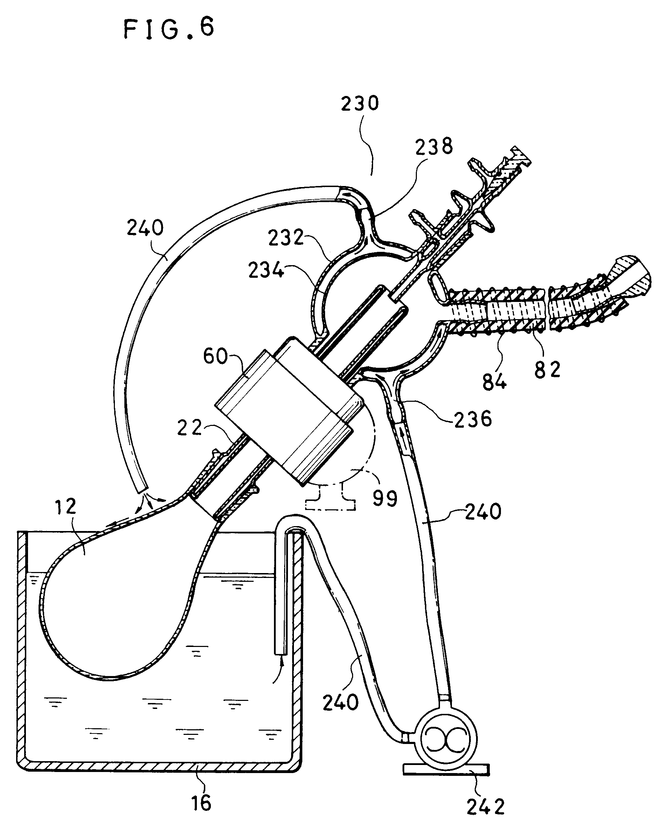

FIGs. 5 and 6 show still other embodiments. Corresponding parts and components to the first embodiment are shown by the same numerals and marks, and the description thereon made in the first embodiment similarly apply. Differences and features of this first embodiment from the first embodiment are as follows.

In the embodiments shown in Figs. 5 and 6, an adapter 130 and 230 of relatively large size is employed in common in order to make it to serve as a buffering space, which is effective for preventing bumping which may occur in the case of treating low boiling-point solvent. In addition, flexible tubes 82 for connecting the buffering space with a separately disposed condensor and a vacuum source are provided with an electric heater 84. In this manner, the lowering of the temperature of the solvent vapor is effectively prevented and thus no substantial dew-drop formed in the path up to the condensor.

Of these, the adapter 130 shown in Fig. 5 is of an inside-silver-plated adiabatic evacuated structure of double walls 132, 134, and has a needle valve 156 on the tip of the plug 142 of the plug cock.

On the other hand, the adapter 230 shown in Fig. 6 has a jacket comprising the outer and inner walls 232, 234 of a double wall structure and two branch pipes 236, 238. The warmed water in a water bath 16 is pumped by a pump 242 to be circulated through pipelines 240 and a spherical space formed between the walls 232 and 234 to prevent lowering of temperature of the solvent vapor inside the adapter 230.

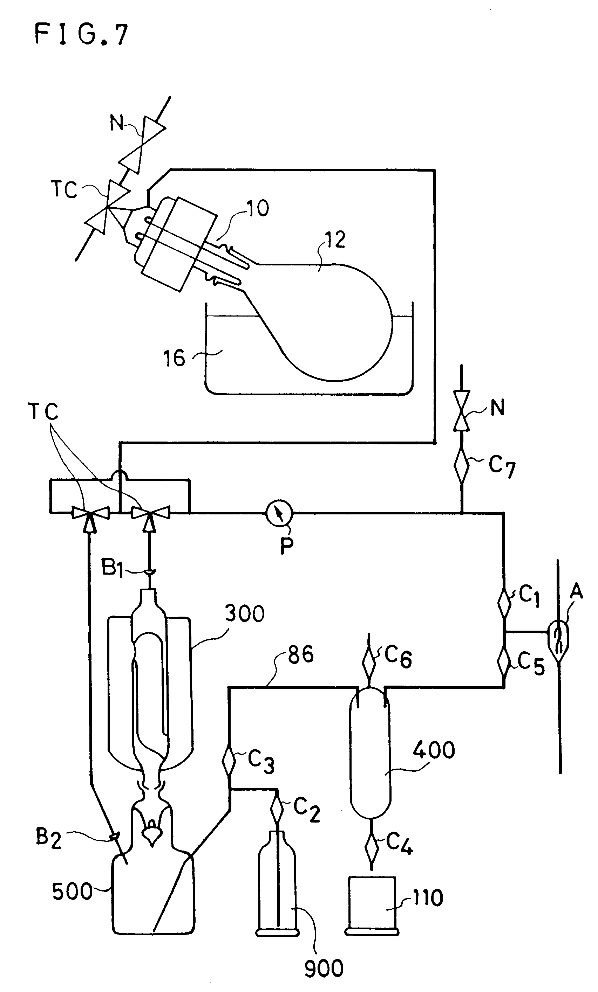

Fig. 7 is a schematic flow diagram showing an example of gas/liquid separating and/or solvent concentrating system configured by combining the rotary evaporator 10 embodying the present invention with associated components. In this system, the solvent vapor from the rotary evaporator 10 is introduced into a heat-exchanging condensor 300 for liquefying and condensing it, and the condensed solvent is recovered in a condensed liquid reservoir 500 of inside silver-plated evacuated adiabatic structure.

The generated solvent vapor is led to either of the top of the heat-exchanging condensor 300 or the shoulder of the condensed liquid adiabatic reservoir 500, through either one of ball-joints B1 or B2, respectively, responding to modes of three-way cocks TC selected in accordance with physico-chemical properties of the solvent. The ball-joint not selected for the operation is connected to an aspirator A through a pressure gauge P and a cock C1.

The three way cock TC can be dispensed with, and the likewise operation may be carried out by manually switching the pipe-line from the rotary evaporator 10 to the selected one of the ball-joints B1, B2, and by connecting the not-selected one to the pipeline 86 to the aspirator A.

The pipeline 86 from the condensed liquid reservoir 500 is arranged to connect with a freeze-protecting solvent container 900 through a cock C2 or with a recovered solvent container 400 through a cock C3. In the case of recovering a solvent which is liable to freeze, the pressure inside the condensed liquid reservoir 500 is reduced to introduce a small amount of the freeze-protecting solvent into the condensed liquid reservoir 500, in advance of the actual operation, by making the mode of the cock C2 temporal communicating state. The solvent in the condensed liquid reservoir 500 can be transferred to the recovered solvent container 400 by opening the cock C3, maintaining the pressure inside the recovered solvent container 400 lower than that inside the condensed liquid reservoir 500.

The solvent contained temporarily in the recovered solvent container 400 is transferred to any container 110 through a cock C4 for removal from the system. At the top of the recovered solvent container 400, there is provided two cocks C5 and C6, connected to atmosphere and to an aspirator A, respectively.

Between the pressure gauge P and a cock C1, there is provided a cock C7 and a needle valve N which serves to adjust the pressure of the overall system.

The aspirator A may of course be substituted by any vacuum generating means, for instance, a vacuum pump.

The below mentioned table summarizes the results of a series of solvent recovery experiments. In the solution-concentrating system comprising the rotary evaporator of Fig.7 embodying the present invention, the experiments are made on removals of solvent which contains no solute. Amounts of solvent are 100 ml for water and 200 mm for solvents other than water.

Table

| Apparatus | Solvent | Conditions for Evaporating Solvent | | | Solvent Recovering | | Note |
|---|---|---|---|---|---|---|---|
| | | Tem. of Bath (°C) | Degree of Vacuum kPa (mm/Hg) | Time for Evaporation (min.) | Recovered Solvent Tem. (°C) | Rate (%) | |
| Invention | Diethyl ether | 20 | 689(100) | 3.2 | -46.5 | 100.0 | Vapor inlet: top |
| Control | | 20 | 689(100) | 6.0 | -11.5 | 80.3 | |
| Invention | Acetone | 30 | 324(47) | 5.0 | -49.7 | 100.0 | Vapor inlet: top |
| Control | | 30 | 462(67) | 6.5 | -14.2 | 69.2 | |
| Invention | Chloroform | 30 | 414(60) | 6.0 | -0.9 | 100.0 | Vapor inlet:bottom |
| Control | | 30 | 462(67) | 6.2 | 1.8 | 95.1 | |
| Invention | Methanol | 30 | 145(21) | 10.5 | -4.1 | 100.0 | Vapor inlet:bottom |
| Control | | 30 | 255(37) | 12.0 | -2.0 | 95.4 | |
| Invention | Water | 60 | 227(33) | 19.0 | 16.5 | --- | No dew-drop formed on flow path. |
| Control | | 60 | 227(33) | 21.0 | 28.5 | --- | Abundant dew-drop formed on flow path. |

7

In the experiments, a "ROTARY VACUUM EVAPORATOR N4" available from TOKYO RIKA KABUSHIKI KAISHA (Nominal Diameter of the joint-pipe: 29/32, actual inner diameter: 20 mm) was used as a control apparatus as it was, by filling dry ice as the cooling medium. The apparatus of the invention was a solution concentrating system arranged after a manner discussed with reference to Fig. 7. The adapter accommodating the joint-pipe of the evacuated double tube of actual inner diameter of 10 mm as illustrated in Fig. 1 is used in combination with a condensor disclosed in Jikkai (Unexamined published utility model application) Hei 1-120,902 (120,902/1989).

Both the control and invention apparata are set to "8" of the dial in their regulators for the driving means of the evaporators throughout the above-described experiments. Adiabatic pipes are employed in connecting the components of the invention apparatus. In the case of evaporating water in particular, the pipes are electrically heated. An aspirator of sink-discharge type (temperature of the running water; 20 °C) was used as the vacuum source.

Although the maximum degree of vacuum attainable in the removals of acetone and chloroform is 145kPa (21 mmHg), the degrees are adjusted to 324kPa (47 mmHg) and 414kPa (60 mmHg), respectively, for preventing bumping.

The improvements in the solvent recovery rate shown by this Table are, at first sight, seems to be trivial. These slight differences in the recovery rate from those obtained by the control apparatus are however not easily attainable but have a great significance in a closed aspirating system. That is, although the amount is very small, the solvent is mixed with the water circulating through the aspirator, to accumulate therein and to lower the capacity of the aspirator in a short time period.

On the other hand, from the results summarized in this Table it is appreciated that the temperatures of the recovered solvents other than water are greatly lowered, to demonstrate the significant improvements in the concentrating efficiency in the preceded steps. In the case of water however, the improvement is not clearly demonstrated in numeral. The reason for this may be that the inner diameter of the joint-pipe of the invention apparatus was 10 mm, which is only 1/2 (half) of that of the control apparatus (20 mm), or that the cross-sectional area of the joint-pipe of the invention apparatus was only 1/4 of the control apparatus. Therefore, an increased flow path resistance at this narrow path takes place. Thus it cannot be denied that the increased flow path resistance may possibly offset the improvement in the evaporating efficiency.

Since the above experiments were carried out by employing the currently available rotary evaporator with minimum modification, the size of the rotating component of the driving means, with which the joint-pipe of the present invention is engaging, was greatly limited. Thus, although no clear improvement in the overall evaporating efficiency was obtained, the present invention succeeded in complete solvent removal from solute to dryness for the first time. The operation had hitherto been considered to be impossible by the control apparatus.

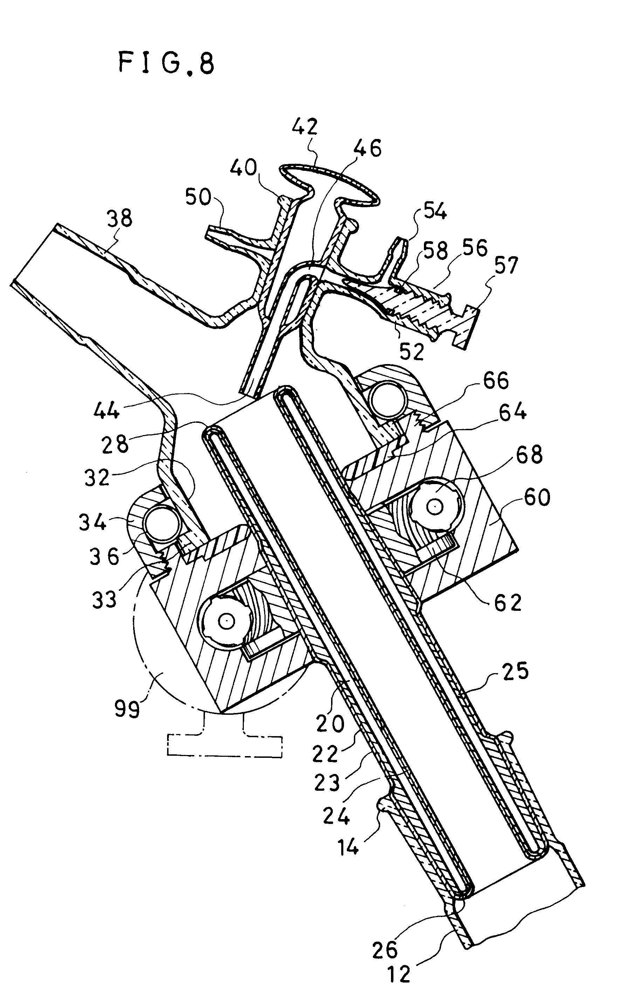

In a still another embodiment illustrated in Fig. 8, the joint-pipe 20 is made of stainless steel covered with layers 23, 25 of glass-lining. In this case, the inside silver-plated layer can be dispensed with and durability was much improved.

As mentioned above, the present invention can be implemented in extremely diversified ways and its advantages are great. It is clear that the above description has been given by way of non-limiting example. Variations and modifications are possible without going out of the scope of the appended claims.

**Claims**

1. A rotary evaporator (10) comprising a rotatable sample flask (12) and a condensor (70), characterized by a joint pipe (20) of an evacuated double tube structure firmly connected at its lower end (26) with the top opening of the sample flask (14) and having a part between its lower (26) and its upper end (28) engaged with rotation means (62) in order to rotatably be driven around its longitudinal axis in tilted posture.

2. The rotary evaporator (10) as claimed in Claim 1, wherein said joint-pipe (20) of an evacuated double tube structure is made of glass and the inside of said pipe facing said evacuated space is silver-plated.

3. The rotary evaporator (10) as claimed in Claim 1, wherein said joint-pipe (20) of an evacuated double tube structure is made of stainless steel and a glass tube is fit in an inner one of said double tube.

4. The rotary evaporator (10) as claimed in Claim 1, wherein said joint-pipe (20) of an evacuated double tube structure is made of stainless steel and is entirely glass-glazed.

5. The rotary evaporator (10) as claimed in Claim 1, wherein said joint-pipe (20) of an evacuated double tube structure is made of stainless steel and is entirely coated with layer of a chemically inert substance.

6. The rotary evaporator (10) as claimed in Claim 5, wherein said chemically inert substance is polytetrafluoroethylene.

7. The rotary evaporator (10) as claimed in Claim 1, wherein said joint-pipe (20) is configured in such a manner to be connectable at its lower end (26) with an upper opening of a sample flask (12) and engageable, at its middle part with a rotating component (62) of a driving means, and to be projectable at its upper end (28) into a lower opening of a condensor (70, 100, 300) or adapter (30, 130, 230) to make a common interior space which communicates with these three components.

8. The rotary evaporator (10) as claimed in Claim 7, wherein said lower opening of said condensor or adapter has a flange which is to be secured to a stationary part of said driving means.

9. The rotary evaporator (10) as claimed in Claim 7, wherein said upper end (28) of said joint-pipe (20) is tightly covered with a ball-cap (29) made of a low friction material and said lower opening of said condensor (70, 100, 300) or adapter is lap-finished to form a sealed joint with said ball-cap (29).

10. The rotary evaporator (10) as claimed in Claim 9, wherein said ball-cap (29) is made of polytetrafluoroethylene.

11. The rotary evaporator (10) as claimed in claim 8, wherein said condensor (70, 100, 300) has, within its inside space, a coiled tube (72) for circulating cooling water, at its upper end, a plug cock with a plug having two side ports which communicate with two branch pipes (50, 52), respectively, one carrying a needle valve (56) for replenishing inert gas and the other for replenishing sample liquid, and, around its lower end, two branch pipes, one for connecting with a vacuum source and the other for expelling the condensed liquid.

12. The rotary evaporator (10) as claimed in Claim 8, wherein said adapter has, an upper opening closed with a plug cock with a plug having two side ports which communicate with two branch pipes (50, 52) respectively, one carrying a needle valve (56) for replenishing inert gas and the other for replenishing sample liquid, and, around its lower end wherein the upper end of said joint pipe is accommodated, a branch pipe which leads to the condensor (70, 100, 300).

13. The rotary evaporator as claimed in Claim 8, wherein said adapter (30, 130, 230) further has, at a position diametrically opposite to that of said branch pipe which leads to the condensor (70, 100, 300), a branch pipe (78) carrying a communicating ball-joint (80) for connecting the adapter (30, 130, 230) with a condensed liquid reservoir (90).

14. The rotary evaporator as claimed in Claim 13, wherein major part of said adapter (30) is made of glass and of an adiabatic double wall evacuated structure.

15. The rotary evaporator (10) as claimed in Claim 13, wherein major part of said adapter (30, 130, 230) is of a double wall structure and warm water for heating the sample flask (12) is circulated through a space formed between said double walls.

16. The rotary evaporator as claimed in Claim 13, wherein major part of said adapter (30, 130, 230) is capable of being heated by an electric heater.

17. The rotary evaporator as claimed in Claim 8, wherein said plug of said plug cock is of an adiabatic double wall evacuated structure.

## Patentansprüche

1. Rotierender Verdampfer (10), der einen drehbaren Probenkolben (12), und einen Kondensator (70) aufweist, **gekennzeichnet durch** ein Verbindungsrohr (20), das eine evakuierte Doppelrohranordnung

9

aufweist, welche an ihrem unteren Ende (26) fest mit der oberen Öffnung des Probenkolbens (14) verbunden ist, und bei dem ein Teil zwischen ihrem unteren (26) und ihrem oberen Ende (28) mit einer Rotationsvorrichtung verbunden ist, um es um ihre Längsachse in Schräglage drehbar anzutreiben.

2. Rotierender Verdampfer (10) nach Anspruch 1, in welchem das Verbindungsrohr (20), das eine evakuierte Doppelrohranordnung aufweist, aus Glas hergestellt ist, und die dem evakuierten Hohlraum zugewandte Innenseite des Rohrs mit Silber plattiert ist.

3. Rotierender Verdampfer (10) nach Anspruch 1, in welchem das Verbindungsrohr (20), das eine evakuierte Doppelrohranordnung aufweist, aus rostfreiem Stahl hergestellt ist, und in welchem ein Glasrohr in einem inneren Rohr des Doppelrohrs eingepaßt ist.

4. Rotierender Verdampfer (10) nach Anspruch 1, in welchem das Verbindungsrohr (20), das eine evakuierte Doppelrohranordnung aufweist, aus rostfreiem Stahl hergestellt und ganz mit Glas überzogen ist.

5. Rotierender Verdampfer (10) nach Anspruch 1, in welchem das Verbindungsrohr (20), das eine evakuierte Doppelrohranordnung aufweist, aus rostfreiem Stahl hergestellt und ganz mit einer chemisch inerten Schicht überzogen ist.

6. Rotierender Verdampfer (10) nach Anspruch 5, in welchem die chemisch inerte Substanz Polytetrafluorethylen ist.

7. Rotierender Verdampfer (10) nach Anspruch 1, in welchem das Verbindungsrohr (20) so gebildet ist, daß sie an ihrem unteren Ende (26) an der oberen Öffnung des Probenkolbens (12) anschließbar und an ihrem Mittelstück mit einem drehbaren Bauteil (62) einer Antriebsvorrichtung verbindbar ist, und daß es an seinem oberen Ende (28) in eine untere Öffnung eines Kondensators (70, 100, 300) oder eines Adapters (30, 130, 230) hineinragen kann, um einen gemeinsamen Innenraum bereitzustellen, welcher mit diesen drei Komponenten in Verbindung steht.

8. Rotierender Verdampfer (10) nach Anspruch 7, in welchem die untere Öffnung des Kondensators oder Adapters einen Flansch aufweist, der an einem ortsfesten Teil der Antriebsvorrichtung zu befestigen ist.

9. Rotierender Verdampfer (10) nach Anspruch 7, in welchem das obere Ende (28) des Verbindungsrohrs (20) fest mit einer Kugelklappe (29), die aus einem reibungsarmen Material hergestellt ist, verschlossen ist, und in welchem die untere Öffnung des Kondensators (70, 100, 300) oder Adapters geläppt ist, um eine abgedichtete Verbindung mit der Kugelklappe (29) zu bilden.

10. Rotierender Verdampfer (10) nach Anspruch 9, in welchem die Kugelklappe (29) aus Polytetrafluorethylen hergestellt ist.

11. Rotierender Verdampfer (10) nach Anspruch 8, in welchem der Kondensator (70, 100, 300) in seinem Innenraum eine Rohrschlange (72) für die Zirkulation von Kühlwasser, an seinem oberen Ende einen Kegelhahn mit einem Zapfen, der zwei seitliche Öffnungen aufweist, welche mit zwei Zweigrohren (50, 52) respektive in Verbindung stehen, wobei eine ein Nadelventil (56) trägt, um inertes Gas nachzufüllen, und die andere dazu dient, um Prüfflüssigkeit nachzufüllen, und um das untere Ende zwei Zweigrohre aufweist, von denen eines zur Verbindung mit einer Vakuumquelle und das andere zum Ausstoßen der kondensierten Flüssigkeit dient.

12. Rotierender Verdampfer (10) nach Anspruch 8, in welchem der Adapter eine obere Öffnung, die mit einem Kegelhahn verschlossen ist, welcher einen Zapfen mit zwei seitlichen Öffnungen aufweist, die mit zwei Zweigrohren (50, 52) respektive in Verbindung stehen, von denen eine ein Nadelventil (56) aufweist, um neutrales Gas aufzufüllen, und die andere dazu dient, um Prüfflüssigkeit auszustoßen, und um ihr unteres Ende, worin das obere Ende der Verbindungsrohr aufgenommen ist, ein Zweigrohr aufweist, welches zu dem Kondensator (70, 100, 300) führt.

13. Rotierender Verdampfer nach Anspruch 8, in welchem der Adapter (30, 130, 230) außerdem an einer Stelle, welche diametral der des Zweigrohrs gegenüberliegt, das zu dem Kondensator (70, 100, 300) führt, ein Zweigrohr (78) mit einem verbindenden Kugelgelenk (80), aufweist, um den Adapter (30, 130, 230) mit einem Behälter (90) für kondensierte Flüssigkeit zu verbinden.

14. Rotierender Verdampfer nach Anspruch 13, in welchem der Hauptteil des Adapters (30) aus Glas und aus einer adiabatischen, evakuierten Doppelwandanordnung hergestellt ist.

15. Rotierender Verdampfer (10) nach Anspruch 13, in welchem der größte Teil des Adapters (30, 130, 230 eine Doppelwandanordnung aufweist, und in welchem warmes Wasser zur Erhitzung des Prüffkolbens (12) durch einen Raum, der zwischen den Doppelwänden gebildet ist, zirkuliert wird.

16. Rotierender Verdampfer nach Anspruch 13, in welchem der größte Teil des Adapters (30, 130, 230) durch ein elektrisches Heizgerät beheizt werden kann.

17. Rotierender Verdampfer nach Anspruch 8, in welchem der Zapfen des Kegelhahns eine adiabatischen, evakuierte Doppelwandanordnung aufweist.

**Revendications**

1. Evaporateur rotatif (10) comprenant un flacon rotatif avec un échantillon (12) et un condenseur (70), caractérisé par un tube de connexion (20) ayant une structure à double paroi mise sous vide, connecté fermement par son extrémité inférieure (26) à l'ouverture supérieure du flacon à échantillon (14) et ayant une partie entre son extrémité inférieure (26) et son extrémité supérieure (28) engagée avec un moyen de rotation (62), afin d'être entraînée en rotation autour de son axe longitudinal dans une position inclinée.

2. Evaporateur rotatif (10) selon la revendication 1, où ledit tube de connexion (20) avec une structure à double paroi mise sous vide est réalisé en verre et l'intérieur dudit tube faisant face à l'espace mis sous vide est argenté.

3. Evaporateur rotatif (10) selon la revendication 1, où ledit tube de connexion (20) avec une structure à double paroi mise sous vide est réalisé en acier inoxydable et où un tube de verre est inséré à l'intérieur du tube double.

4. Evaporateur rotatif (10) selon la revendication 1, où ledit tube de connexion (20) avec une structure à double paroi mise sous vide est réalisé en acier inoxydable, et il est entièrement vitrifié.

5. Evaporateur rotatif (10) selon la revendication 1, où ledit tube de connexion (20) avec une structure à double paroi mise sous vide est réalisé en acier inoxydable, et il est entièrement recouvert d'une couche d'une substance chimiquement inerte.

6. Evaporateur rotatif (10) selon la revendication 5, où ladite substance chimiquement inerte est le polytétrafluoroéthylène.

7. Evaporateur rotatif (10) selon la revendication 1, où ledit tube de connexion (20) est réalisé de manière à pouvoir être connecté par son extrémité inférieure (26) avec une ouverture supérieure d'un récipient à échantillon (12), à pouvoir s'engager dans sa partie médiane avec un composant rotatif (62) d'un moyen d'entraînement, et à pouvoir faire saillie à son extrémité supérieure (28) dans une ouverture inférieure d'un condenseur (70, 100, 300) ou d'un adaptateur (30, 130, 230) de manière à réaliser un espace interne commun qui communique avec ces trois composants.

8. Evaporateur rotatif (10) selon la revendication 7, où ladite ouverture inférieure dudit condenseur ou adaptateur a une bride qui est fixée à ladite partie stationnaire dudit moyen d'entraînement.

9. Evaporateur rotatif (10) selon la revendication 7, où ladite extrémité supérieure (28) dudit tube de connexion (20) est recouverte d'une manière étanche par un capuchon sphérique (29) réalisé en un matériau à faible friction et ladite ouverture inférieure dudit condenseur (70, 100, 300) ou adaptateur est rodée pour former un joint étanche avec ledit capuchon sphérique (29).

**10.** Evaporateur rotatif (10) selon la revendication 9, où ledit capuchon sphérique (29) est réalisé en polytétrafluoroéthylène.

**11.** Evaporateur rotatif (10) selon la revendication 8, où ledit condenseur (70, 100, 300) comporte, dans son espace intérieur, un tube hélicoïdal (72) pour faire circuler de l'eau de refroidissement à son extrémité supérieure, un obturateur à robinet ayant deux ouvertures latérales qui communiquent respectivement avec deux branchements (50, 52), un portant une valve à pointeau (56) pour l'alimentation en gaz inerte et l'autre pour rajouter de la solution à évaporer, et au voisinage de son extrémité inférieure deux branchements, un pour connexion avec une source de vide et l'autre pour évacuer le solvant condensé.

**12.** Evaporateur rotatif (10) selon la revendication 8, où ledit adaptateur a une ouverture supérieure fermée avec un obturateur à robinet ayant deux ouvertures latérales qui communiquent respectivement avec deux branchements (50, 52), un portant une valve à pointeau (56) pour l'alimentation en gaz inerte et l'autre pour rajouter du solvant à évaporer, et au voisinage de son extrémité inférieure, où l'extrémité supérieure dudit tube de connexion vient se placer, un branchement qui conduit au condenseur (70, 100, 300).

**13.** Evaporateur rotatif selon la revendication 8, où ledit adaptateur (30, 130, 230) comporte en outre, en une position diamétralement opposée à celle dudit branchement qui conduit au condenseur (70, 100, 300), un branchement (78) portant un joint sphérique (80) pour connecter l'adaptateur (30, 130, 230) à un récipient (90) de solvant condensé.

**14.** Evaporateur rotatif selon la revendication 13, où la majeure partie dudit adaptateur (30) est réalisée en verre avec une structure adiabatique à double paroi mise sous vide.

**15.** Evaporateur rotatif (10) selon la revendication 13, où la majeure partie dudit adaptateur (30, 130, 230) est une structure à double paroi et où de l'eau chaude pour chauffer le flacon avec l'échantillon (12) circule dans l'espace formé entre les deux parois.

**16.** Evaporateur rotatif selon la revendication 13, où la majeure partie dudit adaptateur (30, 130, 230) est conçue pour être chauffée par un chauffage électrique.

**17.** Evaporateur rotatif selon la revendication 8, où ledit obturateur dudit obturateur à robinet a une structure adiabatique à double paroi mise sous vide.

FIG.1

FIG.2

# F I G . 3

EP 0 433 729 B1

FIG.4

# F I G . 5

FIG.6

# F I G.7

FIG.8